# EUROPÄISCHE PATENTSCHRIFT

(11) **EP 3 321 620 B1**
(45) Veröffentlichungstag und Bekanntmachung des Hinweises auf die Patenterteilung: **31.03.2021**
(21) Anmeldenummer: 17199901.4
(22) Anmeldetag: 03.11.2017
(51) Int. Cl.: F27B 9/24, F27D 3/02, C03B 35/18, C03B 40/02

(54) **ROLLENOFEN ZUR THERMISCHEN BEHANDLUNG EINES BRENNGUTS, VERWENDUNG DES ROLLENOFENS UND VERFAHREN ZUR ÖKONOMISCHEN BEHANDLUNG EINES BRENNGUTS MIT WÄRME**
ROLLER FURNACE FOR THERMAL TREATMENT OF AN ITEM, USES THEREOF AND METHOD FOR ECONOMICAL TREATMENT OF AN OBJECT TO BE FIRED WITH HEAT
FOUR À ROULEAUX DESTINÉ AU TRAITEMENT THERMIQUE D'UN PRODUIT À CUIRE, UTILISATION DE FOUR À ROULEAUX ET PROCÉDÉ DE TRAITEMENT ÉCONOMIQUE D'UN PRODUIT À CUIRE PAR CHALEUR

(30) Priorität: 14.11.2016 DE 102016222257
(43) Veröffentlichungstag der Anmeldung: 16.05.2018
(73) Patentinhaber: Fraunhofer-Gesellschaft zur Förderung der angewandten Forschung e.V., 80686 München (DE)
(72) Erfinder: Hausherr, Jan Marcel, 95473 Altencreussen (DE); Toma, Liviu, 95448 Bayreuth (DE); Schmidt, Jens, 95445 Bayreuth (DE); Raether, Friedrich, 95117 Emtmannsberg (DE)
(74) Vertreter: Pfenning, Meinig & Partner mbB

(56) Entgegenhaltungen:
- DE-C1- 4 237 862

## Beschreibung

Es wird ein Rollenofen zur thermischen Behandlung eines Brennguts bereitgestellt, der sich dadurch auszeichnet, dass er mindestens eine Rolle aufweist, die mindestens ein im Heizraum angeordnetes Mittelsegment in der Mitte der Rolle und zwei zumindest bereichsweise außerhalb des Heizraums angeordnete Endsegmente an jeweils einem Ende der Rolle enthält, wobei das erste und zweite Endsegment jeweils eine kraftschlüssige und/oder formschlüssige Verbindung mit dem Mittelsegment aufweisen und das erste und zweite Endsegment eine niedrigere spezifische Wärmeleitfähigkeit aufweisen als das Mittelsegment. Hierdurch wird erreicht, dass die Wärmeverluste des Rollenofens minimiert werden und der Rollenofen sehr ökonomisch betrieben werden kann. Es wird die Verwendung des erfindungsgemäßen Rollenofens zur thermischen Behandlung eines Brennguts vorgeschlagen und ein Verfahren zur ökonomischen Behandlung eines Brennguts mit Wärme vorgestellt.

Bei Rollenöfen wird das zu behandelnde Brenngut üblicherweise auf temperaturbeständigen, mehrfach verwendbaren metallischen, feuerfesten und/oder keramischen Trägergestellen platziert und sequentiell durch den Heizraum geführt. Der Transport erfolgt dabei über Rollen, wie z.B. in der DE 42 37 862 C1 dargestellt, die hintereinander im Ofenraum liegen und den Weitertransport des Brennguts gewährleisten.

Ein gravierendes Problem bei diesem Aufbau ist die Durchführung der Rollen aus dem heißen Ofeninnenraum an die kalte Umgebung. Hierbei muss die teilweise bis zu 30 cm starke Ofenwandisolierung durchbrochen werden, was zu Energieverlusten führt. Zusätzlich fungieren die Rollen selber als Wärmeleiter und leiten Wärme aus dem Ofeninnenraum an die Umgebung ab. Beide Effekte verursachen signifikante Wärmeverluste an die Umgebung.

Bestehende industrielle Konzepte, wie z.B. Abschirmhutzen am Rollenende in Kombination mit im Rohr montierten Strahlungsstopfen, sind nur begrenzt effizient. Berechnungen zeigen, dass die bekannten Lösungen den Wärmeverlust lediglich um bis zu 40 % verringern können.

Es besteht der Wunsch, bei industriellen Öfen mit bis zu 800 beidseitigen vorhandenen Rollendurchbrüchen diese Wärmeverluste weiter zu minimieren.

Ausgehend hiervon war es die Aufgabe der vorliegenden Erfindung, einen Rollenofen bereitzustellen, der eine verbesserte thermische Isolierung der Rollen gegenüber der Umgebung des Rollenofens aufweist. Vielmehr sollte ein Verfahren zur ökonomischen Behandlung eines Brennguts mit Wärme bereitgestellt werden und Verwendungen des Rollenofens vorgeschlagen werden.

Die Aufgabe wird gelöst durch den Rollenofen gemäß Anspruch 1, das Verfahren gemäß Anspruch 12 und die Verwendung gemäß Anspruch 15. Die abhängigen Ansprüche zeigen vorteilhafte Weiterbildungen auf.

Erfindungsgemäß wird ein Rollenofen zur thermischen Behandlung eines Brennguts bereitgestellt, enthaltend
a) einen Heizraum, der eine mindestens eine Wärmequelle enthält; und
b) mindestens eine Rolle zum Transport eines Brennguts durch den Heizraum;
dadurch gekennzeichnet, dass die mindestens eine Rolle mindestens ein im Heizraum angeordnetes Mittelsegment in der Mitte der Rolle und ein erstes Endsegment und ein zweites Endsegment enthält, wobei das erste und zweite Endsegment an zwei sich gegenüberliegenden Enden des Mittelsegments angeordnet sind und zumindest bereichsweise außerhalb des Heizraums angeordnet sind, wobei das erste und zweite Endsegment jeweils eine kraftschlüssige und/oder formschlüssige Verbindung mit dem Mittelsegment aufweisen und das erste und zweite Endsegment eine niedrigere spezifische Wärmeleitfähigkeit aufweisen als das Mittelsegment.

Der erfindungsgemäße Rollenofen weist den Vorteil auf, dass er einen geringeren Energieverlust als herkömmliche Rollenöfen zeigt. Dieser Vorteil wird durch die Verringerung der Wärmeleitung entlang der Achse Rolle des Rollenofens erreicht. Als Folge hiervon sind die Energiekosten beim Betrieb des erfindungsgemäßen Rollenofens signifikant reduziert. Es wurde ermittelt, dass die Wärmeverluste durch den Einsatz einer Segmentrolle auf bis zu 10 % des Wärmeverlustes von Rollenöfen ohne segmentierte Rolle reduziert werden können. Als zusätzlicher Vorteil ergibt sich, dass durch die Segmentierung der Rolle eine Anpassung der Rollensteifigkeiten im Außenbereich der Rolle (Endsegmente) erfolgen kann, was eine verringerte Durchbiegung bzw. Verformung durch mechanische Belastungen der Rolle bewirkt. Ferner kann die chemische Beständigkeit der Rolle durch Auswahl geeigneter Werkstoffe einzelner Rollensegmente verbessert werden und ein Austausch einzelner verschlissener Rollensegmente anstelle einer gesamten Rolle kann die Betriebskosten des Rollenofens weiter senken.

In einer bevorzugten Ausgestaltungsform ist der Rollenofen dadurch gekennzeichnet, dass der Rollenofen mindestens zwei, bevorzugt mindestens vier, besonders bevorzugt mindestens acht, insbesondere mindestens zwanzig, Rollen zum Transport eines Brennguts durch den Heizraum aufweist, die bevorzugt jeweils mindestens ein im Heizraum angeordnetes Mittelsegment und zwei zumindest bereichsweise außerhalb des Heizraums angeordnete Endsegmente enthalten, die sich quer zu einer Transportrichtung befinden.

Das erste Endsegment und/oder das zweite Endsegment kann
i) einen größeren Innendurchmesser als der Außendurchmesser des Mittelsegments aufweisen und bevorzugt einen Innendurchmesser aufweisen, der 0,01 bis 2 mm, bevorzugt 0,05 bis 1,5 mm, besonders bevorzugt 0,1 bis 1,0 mm, insbesondere 0,2 bis 0,5 mm, optional maximal 0,01 mm, größer ist als der Außendurchmesser des Mittelsegments; und/oder
ii) einen kleineren Außendurchmesser als der Innendurchmesser des Mittelsegments aufweisen und bevorzugt einen Außendurchmesser aufweisen, der 0,01 bis 2 mm, bevorzugt 0,05 bis 1,5 mm, besonders bevorzugt 0,1 bis 1,0 mm, insbesondere 0,2 bis 0,5 mm, optional maximal 0,01 mm, kleiner ist als der Innendurchmesser des Mittelsegments; und/oder
iii) zumindest bereichsweise eine Schicht enthalten, die in Richtung Mittelsegment angeordnet ist, bevorzugt eine Gleitschicht oder eine Haftschicht, wobei die Schicht besonders bevorzugt das Mittelsegment zumindest bereichsweise kontaktiert.

Die Verbindung zwischen dem Mittelsegment und dem ersten und/oder zweiten Endsegment kann zumindest teilweise über eine Hülse erfolgen, wobei die Hülse das Mittelsegment zumindest bereichsweise kontaktiert und
i) das erste und/oder zweite Endsegment kontaktiert; oder
ii) mindestens ein weiteres Segment der Rolle kontaktiert, das sich zwischen dem Mittelsegment und dem ersten oder zweiten Endsegment befindet.

Die Hülse kann
i) einen größeren Innendurchmesser als der Außendurchmesser der Rolle aufweisen und bevorzugt einen Innendurchmesser aufweisen, der 0,01 bis 2 mm, bevorzugt 0,05 bis 1,5 mm, besonders bevorzugt 0,1 bis 1,0 mm, insbesondere 0,2 bis 0,5 mm, optional maximal 0,01 mm, größer ist als der Außendurchmesser der Rolle; und/oder
ii) einen kleineren Außendurchmesser als der Innendurchmesser der Rolle aufweisen und bevorzugt einen Außendurchmesser aufweisen, der 0,01 bis 2 mm, bevorzugt 0,05 bis 1,5 mm, besonders bevorzugt 0,1 bis 1,0 mm, insbesondere 0,2 bis 0,5 mm, optional maximal 0,01 mm, kleiner ist als der Innendurchmesser der Rolle; und/oder
iii) eine Wanddicke aufweisen, die 0,1 mm bis 20 mm, 0,2 mm bis 10 mm, besonders bevorzugt 0,3 mm bis 5 mm, insbesondere 0,4 mm bis 2 mm, beträgt; und/oder
iv) als Manschette ausgestaltet sein; und/oder
v) zumindest bereichsweise eine Schicht enthalten, die zwischen Hülse und Rolle angeordnet ist, wobei die Schicht bevorzugt eine Gleitschicht oder Haftschicht ist und besonders bevorzugt die Hülse und die Rolle bevorzugt zumindest bereichsweise kontaktiert.

Ferner kann die Hülse
i) ein Metall, bevorzugt Stahl, besonders bevorzugt Edelstahl; und/oder
ii) eine Metalllegierung, bevorzugt ausgewählt aus der Gruppe bestehend aus Cobaltlegierung, Nickellegierung und Mischungen hiervon; und/oder
iii) Metallkeramik, bevorzugt eine Metallkeramik ausgewählt aus der Gruppe bestehend aus TiC, WC, TaC und Mischungen hiervon; und/oder
iv) ein oxidisches Material, bevorzugt ein oxidisches Material ausgewählt aus der Gruppe bestehend aus Al₂O₃, ZrO₂ und Mischungen hiervon; und/oder
v) einen Hartstoff, bevorzugt einen Hartstoff ausgewählt aus der Gruppe bestehend aus Si₃N₄, SiC und Mischungen hiervon, besonders bevorzugt ausgewählt aus der Gruppe bestehend aus SiSiC, RSiC, LPI-SiC und Mischungen hiervon; und/oder
vi) ein Fasermaterial, bevorzugt ein Fasermaterial ausgewählt aus der Gruppe bestehend aus Glasfasern, Kohlenstofffasern, Siliziumcarbidfasern, Kohlenstoffnanoröhrchen, Basaltfasern, Al₂O₃-Fasern, Stahlfasern und Kombinationen hiervon;
enthalten oder daraus bestehen.

Das Mittelsegment kann
i) ein Metall, bevorzugt Stahl, besonders bevorzugt Edelstahl; und/oder
ii) eine Metalllegierung, bevorzugt ausgewählt aus der Gruppe bestehend aus Cobaltlegierung, Nickellegierung und Mischungen hiervon; und/oder
iii) Metallkeramik, bevorzugt eine Metallkeramik ausgewählt aus der Gruppe bestehend aus TiC, WC, TaC und Mischungen hiervon; und/oder
iv) ein oxidisches Material, bevorzugt ein oxidisches Material ausgewählt aus der Gruppe bestehend aus Al₂O₃, SiO₂, ZrO₂ und Mischungen hiervon; und/oder
v) einen Hartstoff, bevorzugt einen Hartstoff ausgewählt aus der Gruppe bestehend aus Si₃N₄, SiC und Mischungen hiervon, besonders bevorzugt ausgewählt aus der Gruppe bestehend aus SiSiC, RSiC, LPI-SiC und Mischungen hiervon; und/oder
vi) Graphit;
vii) ein Fasermaterial, bevorzugt ein Fasermaterial ausgewählt aus der Gruppe bestehend aus Glasfasern, Kohlenstofffasern, Kohlenstoffnanoröhrchen, Basaltfasern, Al₂O₃-Fasern, Siliziumcarbidfasern, Stahlfasern und Kombinationen hiervon;
enthalten oder daraus bestehen.

Das erste und/oder zweite Endsegment kann
i) ein Metall, bevorzugt Stahl, besonders bevorzugt Edelstahl; und/oder
ii) eine Metalllegierung, bevorzugt ausgewählt aus der Gruppe bestehend aus Cobaltlegierung, Nickellegierung und Mischungen hiervon; und/oder
iii) Metallkeramik, bevorzugt eine Metallkeramik ausgewählt aus der Gruppe bestehend aus TiC, WC, TaC und Mischungen hiervon; und/oder
iv) ein oxidisches Material, bevorzugt ein oxidisches Material ausgewählt aus der Gruppe bestehend aus Al₂O₃, ZrO₂, Y₂O₃, MgO, Mullit und Mischungen hiervon; und/oder
v) einen Hartstoff, bevorzugt einen Hartstoff ausgewählt aus der Gruppe bestehend aus Si₃N₄, SiC und Mischungen hiervon, besonders bevorzugt ausgewählt aus der Gruppe bestehend aus SiSiC, RSiC, LPI-SiC und Mischungen hiervon; und/oder
vi) ein feuerfestes Material, bevorzugt ein feuerfeste Material mit 10-45 Gew.-% Al₂O₃, besonders bevorzugt ein Schamottestein; und/oder
vii) Basalt;
viii) Glas;
ix) Kunststoff;
x) ein Fasermaterial, bevorzugt ein Fasermaterial ausgewählt aus der Gruppe bestehend aus Glasfasern, Kohlenstofffasern, Kohlenstoffnanoröhrchen, Basaltfasern, Al₂O₃-Fasern, Siliziumcarbidfasern, Stahlfasern und Kombinationen hiervon;
enthalten oder daraus bestehen.

In einer bevorzugten Ausgestaltungsform ist das Mittelsegment mit dem ersten und/oder zweiten Endsegment sowohl kraftschlüssig als auch formschlüssig verbunden, bevorzugt über eine Nut-Feder-Verbindung, einen Passstift, eine Passfeder, eine Zahnkupplung und Kombinationen hiervon, bevorzugt über eine Zahnkupplung, deren Zähne im Wesentlichen rechteckig oder wellenförmig ausgestaltet sind.

Das Mittelsegment kann mit dem ersten und/oder zweiten Endsegment auch stoffschlüssig verbunden sein, wobei die stoffschlüssige Verbindung bevorzugt ausgewählt ist aus der Gruppe bestehend aus Klebeverbindung, Lötverbindung, Schweißverbindung und Kombinationen hiervon.

Das erste und/oder zweite Endsegment, bevorzugt das erste und zweite Endsegment, kann eine
i) in Bezug auf die spezifische Wärmeleitfähigkeit des Mittelsegments mindestens 1 %, bevorzugt mindestens 5 %, weiterhin bevorzugt mindestens 10 %, besonders bevorzugt mindestens 20 %, insbesondere mindestens 50 %,
ii) um mindestens 1 W/(m·K), bevorzugt mindestens 10 W/(m·K), weiterhin bevorzugt mindestens 20 W/(m·K), besonders bevorzugt mindestens 50 W/(m·K), insbesondere mindestens 100 W/(m·K);
niedrigere spezifische Wärmeleitfähigkeit aufweisen als das Mittelsegment.

Der Heizraum kann
i) mindestens eine Zufuhr für Gas enthält, bevorzugt mindestens eine Zufuhr für ein Gas ausgewählt aus der Gruppe bestehend aus Wasserdampf, CO, H₂, N₂ und Mischungen hiervon; und/oder
ii) eine Wärmequelle enthält, die dazu geeignet ist, eine Temperatur von 400 bis 1600 °C in dem Heizraum zu erzeugen.

In einer weiteren Ausgestaltungsform der Erfindung enthält das erste und/oder zweite Endsegment mindestens eine, bevorzugt mindestens zwei, besonders bevorzugt mindestens drei, thermisch isolierende Innenkappe(n).

Diese Maßnahme reduziert den Wärmeverlust vom Heizraum in Richtung Außenraum des Rollenofens weiter.

Zudem kann das erste und/oder zweite Endsegment mindestens eine thermisch isolierende Außenkappe aufweisen. Die Außenkappe ist bevorzugt in einer Nut des Rollenofens angeordnet. Die Nut des Rollenofens ist bevorzugt in einem Bereich des Rollenofens angeordnet, in dem die Endsegmente von einem Innenraum des Rollenofens nach außen treten (Durchbruchbereich). Durch die Außenkappe kann der Wärmeverlust aus dem Heizraum weiter minimiert werden.

Ferner wird ein Verfahren zur ökonomischen Behandlung eines Brennguts mit Wärme bereitgestellt, umfassend die Schritte
a) Behandlung von Brenngütern in dem Heizraum eines Rollofens gemäß einem der vorhergehenden Ansprüche;
b) Messung einer Wandstärke des Mittelsegments (= Innensegments), des ersten Endsegments und/oder des zweiten Endsegments der Rolle;
c) Austausch des Mittelsegments, ersten Endsegments und/oder zweiten Endsegments, wenn deren Wandstärke einen kritischen Wert unterschritten hat, wobei der Austausch das Lösen der kraftschlüssigen und/oder formschlüssigen Verbindung vom Mittelsegment zu dem ersten und/oder zweiten Endsegment umfasst.

Der Austausch des Mittelsegments, ersten Endsegments und/oder zweiten Endsegments kann (dann) erfolgen, wenn sich die Wandstärke um 1 bis 2 mm reduziert hat.

Die Behandlung von Brenngütern in dem Heizraum des Rollofens kann bei einer Temperatur von 400 bis 1600 °C erfolgen.

Darüberhinaus wird die Verwendung des erfindungsgemäßen Rollenofens zur thermischen Behandlung eines Brennguts, bevorzugt zur thermischen Behandlung eines Brennguts bei Temperaturen von 400 bis 1600 °C, vorgeschlagen.

Anhang der nachfolgenden Figuren und dem nachfolgenden Beispiel soll der erfindungsgemäße Gegenstand näher erläutert werden ohne diesen auf die hier dargestellten spezifischen Ausführungsformen einschränken zu wollen.

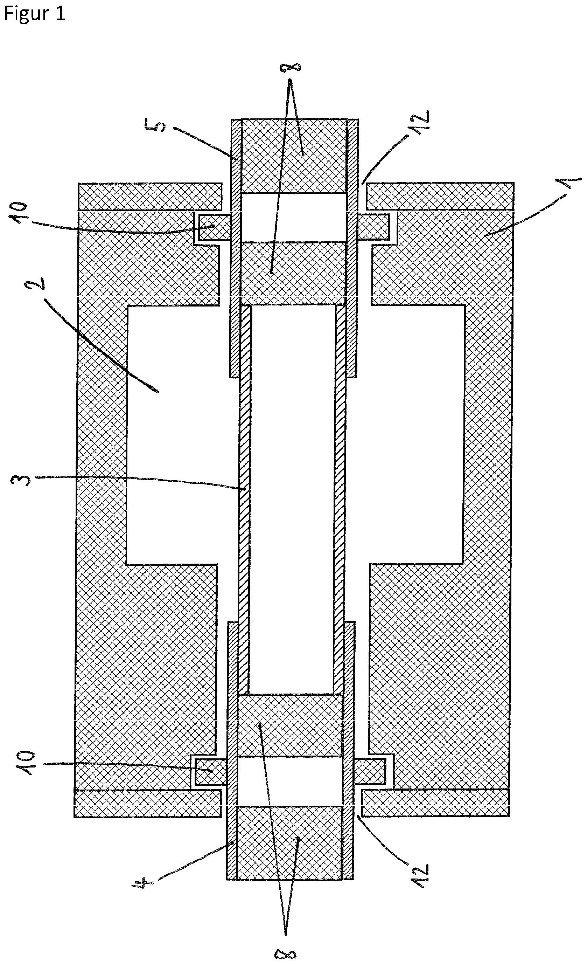

Figur 1 zeigt schematisch einen Querschnitt durch einen erfindungsgemäßen Rollenofen 1. In dieser Ausgestaltungsform ist das erste Endsegment 4 und das zweite Endsegment 5 ohne Manschette mit dem Mittelsegment 3 der Rolle des Rollenofens 1 kraftschlüssig verbunden. In dieser Ausgestaltungsform weisen die beiden Endsegmente 4, 5 einen größeren Innendurchmesser als der Außendurchmesser der Rolle 3 auf. Es wird hier deutlich, dass die Endsegmente 4, 5 (äußere Rollensegmente) den Wärmefluss aus dem Heizraum 2 in Richtung Außenbereich des Rollenofens 1 behindern. Diese Behinderung ist örtlich bereits im Bereich der inneren Ofenwandisolierung, also bevor die Wärme die Außenkappe 10 und den Bereich der Durchbrüche 12 des Rollenofens 1 erreicht. Im Inneren der Endsegmente 4, 5 befinden sich jeweils zwei Innenkappen 8, welche den Wärmefluss vom Heizraum 2 zum Außenbereich des Rollenofens 1 zusätzlich vermindern.

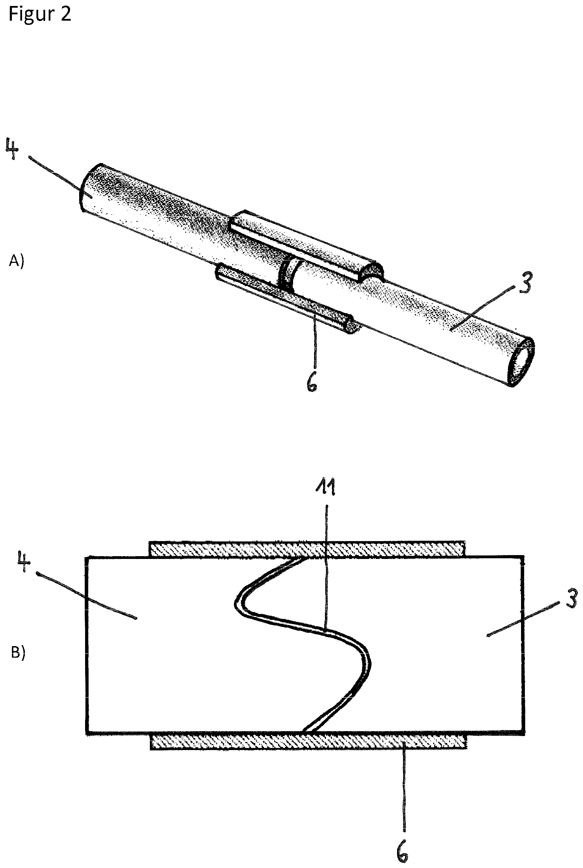

Figur 2 zeigt schematisch eine mögliche Verbindung von einem Mittelsegment 3 der Rolle zu einem ersten Endsegment 4 der Rolle des erfindungsgemäßen Rollenofens 1. Das erste Endsegment 4 der Rolle besteht zumindest teilweise aus einem Werkstoff mit geringer Wärmeleitfähigkeit und ist hier über eine Manschette 6 mit dem Mittelsegment 3 kraftschlüssig verbunden. In Fig. 1A sind die beiden sich gegenüberliegenden Teile des Mittelstücks 3 und des ersten Endsegments 4 glatt und lediglich über die Manschette 6 kraftschlüssig verbunden. In der in Fig. 1B dargestellten Ausgestaltungsform sind die beiden gegenüberliegenden Teile des Mittelstücks 3 und des Endsegments 4 zusätzlich zu der Manschette 6 über eine wellenförmige Zahnkupplung 11 formschlüssig miteinander verbunden.

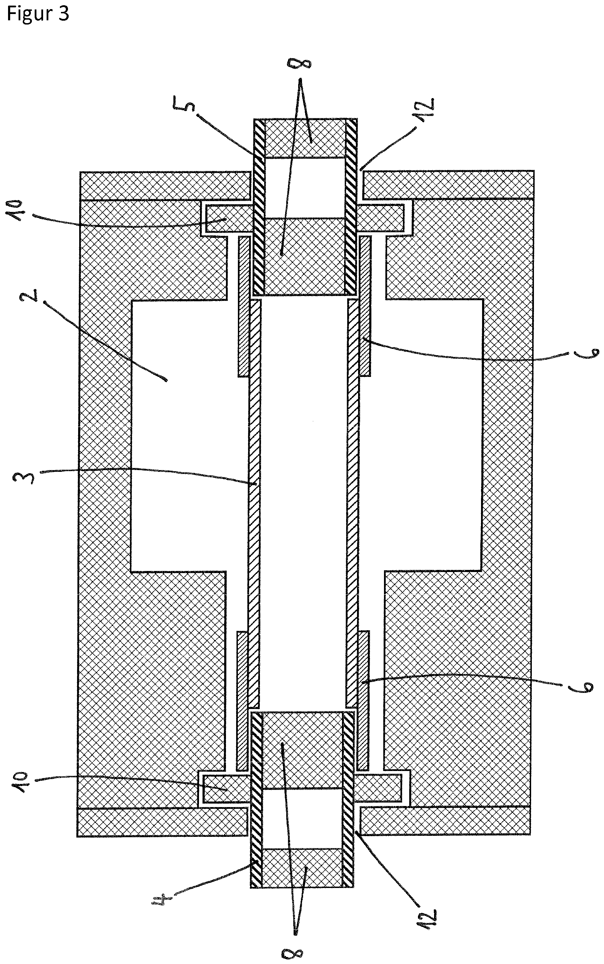

Figur 3 zeigt schematisch einen Querschnitt durch einen erfindungsgemäßen Rollenofen 1. In dieser Ausgestaltungsform verbindet jeweils eine Manschette 6 als Hülse die beiden Endsegmente 4, 5 mit dem Mittelsegment 3 der Rolle des Rollenofens 1. Es wird hier deutlich, dass die Endsegmente 4, 5 (äußere Rollensegmente) den Wärmefluss aus dem Heizraum 2 in Richtung Außenbereich des Rollenofens 1 behindern. Diese Behinderung ist örtlich bereits im Bereich der inneren Ofenwandisolierung, also bevor die Wärme die Außenkappe 10 und den Bereich der Durchbrüche 12 des Rollenofens 1 erreicht. Im Inneren der Endsegmente 4, 5 befinden sich jeweils zwei Innenkappen 8, welche den Wärmefluss vom Heizraum 2 zum Außenbereich des Rollenofens 1 zusätzlich vermindern.

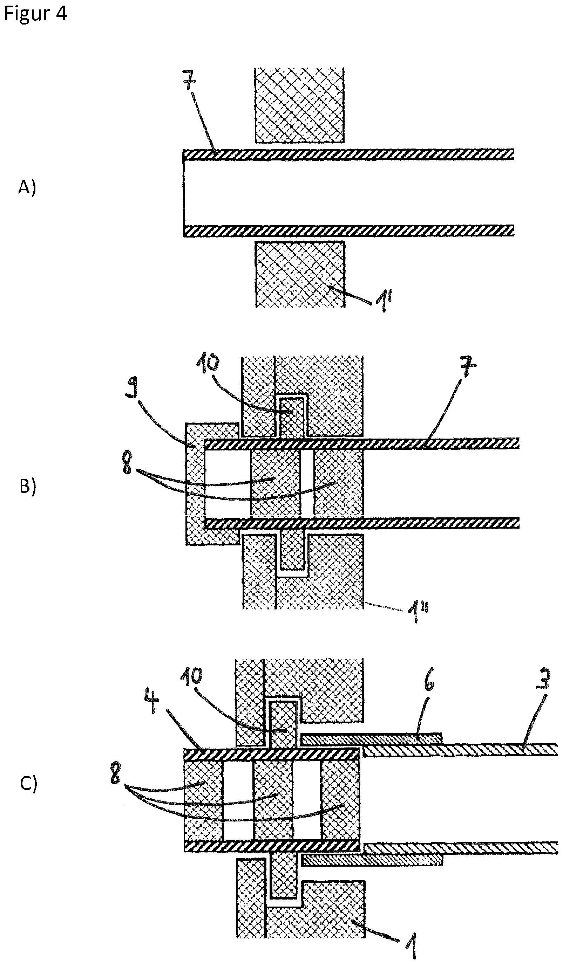

Figur 4 zeigt schematisch einen Querschnitt durch einen Bereich von zwei verschiedenen Rollenöfen 1', 1" aus dem Stand der Technik (Fig. 3A und 3B) und einen erfindungsgemäßen Rollenofen 1 (Fig. 3C). Die Rolle 7 des Rollenofens 1' in Fig. 3A ist nicht segmentiert und verläuft ohne weitere Wärmeisolation vom Innenraum in den Außenraum (d.h. die Umgebung) des Rollenofens 1'. In diesem Rollenofen 1 ist der Wärmeverlust maximal. Ein weiterer Rollenofen 1" aus dem Stand der Technik ist in Fig. 3B dargestellt. Bei dieser Variante ist die aus einem Stück bestehende (d.h. unsegmentierte) Rolle 7 durch vier Kappen (hier zwei Innenkappen 8 und zwei Außenkappen 9, 10) thermisch isoliert. Gegenüber dem in Fig. 3A dargestellten Rollenofen 1' sinkt dadurch der Wärmeverlust um ca. 50%. Der erfindungsgemäße, in Fig. 3C dargestellte, Rollenofen 1 hat neben vier Kappen zur Wärmeisolation (hier drei Innenkappen 8 und eine Außenkappe 10) eine segmentierte Rolle 3, 4, wobei das Außensegment 4 mit dem Innensegment 3 über eine Manschette 6 kraftschlüssig miteinander verbunden sind. Durch diese Maßnahme verbessert sich die Wärmeisolation um den Faktor 5 gegenüber dem in Fig. 3B dargestellten Rollenofen 1" und um den Faktor 10 gegenüber den in Fig. 3A dargestellten Rollenofen 1', d.h. der Wärmeverlust beträgt nur 10 % verglichen mit dem in Fig. 3A dargestellten Rollenofen 1' aus dem Stand der Technik.

### Beispiel - Mögliche Materialien für die einzelnen Rollensegmente und die optionale Hülse

### Endsegmente (äußere Rollensegmente)

Das Endsegment kann enthalten oder bestehen aus
- Al₂O₃ (10 - 30 W/mK);
- ZrO₂-Y₂O₃ (2 - 3 W/mK);
- MgO (7 - 11 W/mK);
- Mullit (2 - 15 W/mK);
- Feuerfest (0,1-1 W/mK);
- Schamott (0,1-1 W/mK);
- Glas (1 W/mK); und/oder
- Basalt oder glasfaserverstärkte Kunststoffe {0,3 - 3,5 W/mK).

### Mittelsegment (inneres Rollensegment)

Das Mittelsegment kann enthalten oder bestehen aus
- hochveredelte Stähle bis 900°C (20 - 150 W/mK);
- gegossene Hartlegierungen (Co, Ni) (20-120 W/mK);
- Hartmetalle (CerMet, TiC, WC, TaC) (20-120 W/mK);
- Al₂O₃ (10 - 30 W/mK);
- Si₃N₄ (monolithisch, 30 W/mK);
- SSiC (40 - 120 W/mK);
- RSiC (20 W/mK);
- Pl-SiC (110-160 W/mK); und/oder
- Grafit (90-160 W/mK).

### Hülse (kann als Manschette ausgestaltet sein)

Die Hülse kann enthalten oder bestehen aus
- hochveredelte Stähle;
- gegossene Hartlegierungen (Basis Co, Ni);
- Hartmetalle (CerMet, TiC, WC, TaC);
- Al₂O₃;
- ZrO₂;
- Si₃N₄;
- SiSiC;
- RSiC; und/oder
- LPI-SiC.

## Patentansprüche

1. Rollenofen zur thermischen Behandlung eines Brennguts, enthaltend
a) einen Heizraum, der eine mindestens eine Wärmequelle enthält; und
b) mindestens eine Rolle zum Transport eines Brennguts durch den Heizraum;
**dadurch gekennzeichnet, dass** die mindestens eine Rolle mindestens ein im Heizraum angeordnetes Mittelsegment in der Mitte der Rolle und ein erstes Endsegment und ein zweites Endsegment enthält, wobei das erste und zweite Endsegment an zwei sich gegenüberliegenden Enden des Mittelsegments angeordnet sind und zumindest bereichsweise außerhalb des Heizraums angeordnet sind, wobei das erste und zweite Endsegment jeweils eine kraftschlüssige und/oder formschlüssige Verbindung mit dem Mittelsegment aufweisen und das erste und zweite Endsegment eine niedrigere spezifische Wärmeleitfähigkeit aufweisen als das Mittelsegment.

2. Rollenofen gemäß Anspruch 1, **dadurch gekennzeichnet, dass** der Rollenofen mindestens zwei Rollen zum Transport eines Brennguts durch den Heizraum aufweist.

3. Rollenofen gemäß dem vorhergehenden Anspruch, **dadurch gekennzeichnet, dass** das erste Endsegment und/oder das zweite Endsegment
i) einen größeren Innendurchmesser als der Außendurchmesser des Mittelsegments aufweist; und/oder
ii) einen kleineren Außendurchmesser als der Innendurchmesser des Mittelsegments aufweist; und/oder
iii) zumindest bereichsweise eine Schicht enthält, die in Richtung Mittelsegment angeordnet ist.

4. Rollenofen gemäß einem der vorhergehenden Ansprüche, **dadurch gekennzeichnet, dass** die Verbindung zwischen dem Mittelsegment und dem ersten und/oder zweiten Endsegment zumindest teilweise über eine Hülse erfolgt, wobei die Hülse das Mittelsegment zumindest bereichsweise kontaktiert und
i) das erste und/oder zweite Endsegment kontaktiert; oder
ii) mindestens ein weiteres Segment der Rolle kontaktiert, das sich zwischen dem Mittelsegment und dem ersten oder zweiten Endsegment befindet.

5. Rollenofen gemäß dem vorhergehenden Anspruch, **dadurch gekennzeichnet, dass** die Hülse
i) einen größeren Innendurchmesser als der Außendurchmesser der Rolle aufweist; und/oder
ii) einen kleineren Außendurchmesser als der Innendurchmesser der Rolle aufweist; und/oder
iii) eine Wanddicke aufweist, die 0,1 mm bis 20 mm beträgt; und/oder
iv) als Manschette ausgestaltet ist; und/oder
v) zumindest bereichsweise eine Schicht enthält, die zwischen Hülse und Rolle angeordnet ist.

6. Rollenofen gemäß einem der beiden vorhergehenden Ansprüche, **dadurch gekennzeichnet, dass** die Hülse
i) ein Metall; und/oder
ii) eine Metalllegierung; und/oder
iii) Metallkeramik; und/oder
iv) ein oxidisches Material; und/oder
v) einen Hartstoff; und/oder
vi) ein Fasermaterial;
enthält oder daraus besteht.

7. Rollenofen gemäß einem der vorhergehenden Ansprüche, **dadurch gekennzeichnet, dass** das Mittelsegment
i) ein Metall; und/oder
ii) eine Metalllegierung; und/oder
iii) Metallkeramik; und/oder
iv) ein oxidisches Material; und/oder
v) einen Hartstoff; und/oder
vi) Graphit;
vii) ein Fasermaterial;
enthält oder daraus besteht.

8. Rollenofen gemäß einem der vorhergehenden Ansprüche, **dadurch gekennzeichnet**, das erste und/oder zweite Endsegment
i) ein Metall; und/oder
ii) eine Metalllegierungon; und/oder
iii) Metallkeramik; und/oder
iv) ein oxidisches Material; und/oder
v) einen Hartstoff; und/oder
vi) ein feuerfestes Material; und/oder
vii) Basalt;
viii) Glas;
ix) Kunststoff;
x) ein Fasermaterial;
enthält oder daraus besteht.

9. Rollenofen gemäß einem der vorhergehenden Ansprüche, **dadurch gekennzeichnet, dass** das Mittelsegment mit dem ersten und/oder zweiten Endsegment
i) kraftschlüssig und formschlüssig verbunden ist; und/oder
ii) auch stoffschlüssig verbunden ist.

10. Rollenofen gemäß einem der vorhergehenden Ansprüche, **dadurch gekennzeichnet, dass** das erste und/oder zweite Endsegment eine
i) in Bezug auf die spezifische Wärmeleitfähigkeit des Mittelsegments mindestens 1 %,
ii) um mindestens 1 W/(m·K);
niedrigere spezifische Wärmeleitfähigkeit aufweist als das Mittelsegment.

11. Rollenofen gemäß einem der vorhergehenden Ansprüche, **dadurch gekennzeichnet, dass** der Heizraum
i) mindestens eine Zufuhr für Gas enthält; und/oder
ii) eine Wärmequelle enthält, die dazu geeignet ist, eine Temperatur von 400 bis 1600 °C in dem Heizraum zu erzeugen.

12. Verfahren zur ökonomischen Behandlung eines Brennguts mit Wärme, umfassend die Schritte
a) Behandlung von Brenngütern in dem Heizraum eines Rollofens gemäß einem der vorhergehenden Ansprüche;
b) Messung einer Wandstärke des Mittelsegments, des ersten Endsegments und/oder des zweiten Endsegments der Rolle;
c) Austausch des Mittelsegments, ersten Endsegments und/oder zweiten Endsegments, wenn deren Wandstärke einen kritischen Wert unterschritten hat, wobei der Austausch das Lösen der kraftschlüssigen und/oder formschlüssigen Verbindung vom Mittelsegment zu dem ersten und/oder zweiten Endsegment umfasst.

13. Verfahren gemäß Anspruch 12, **dadurch gekennzeichnet, dass** der Austausch des Mittelsegments, ersten Endsegments und/oder zweiten Endsegments erfolgt, wenn sich die Wandstärke um 1 bis 2 mm reduziert hat.

14. Verfahren gemäß einem der Ansprüche 12 oder 13, **dadurch gekennzeichnet, dass** die Behandlung von Brenngütern in dem Heizraum des Rollofens bei einer Temperatur von 400 bis 1600 °C erfolgt.

15. Verwendung des Rollenofens gemäß einem der Ansprüche 1 bis 11 zur thermischen Behandlung eines Brennguts, bevorzugt zur thermischen Behandlung eines Brennguts bei Temperaturen von 400 bis 1600 °C.

## Claims

1. A roller furnace for thermally treating an object to be fired, comprising:
a) a heating chamber comprising at least one heat source; and
b) at least one roller for transporting an object to be fired through the heating chamber,
**characterized in that** the at least one roller includes at least one center segment in the center of the roller and being arranged in the heating chamber i, and a first end segment and a second end segment, the first and second end segment being arranged at two mutually opposing ends of the center segment and being at least zonally arranged outside the heating chamber, the first and second end segment in each case having a force-locking and/or form-locking connection to the center segment, and the first and second end segment having a lower specific thermal conductivity than the center segment.

2. The roller furnace according to claim 1, **characterized in that** the roller furnace comprises at least two rollers for transporting an object to be fired through the heating chamber.

3. The roller furnace according to the preceding claim, **characterized in that** the first end segment and/or the second end segment
i) have a larger inside diameter than the outside diameter of the center segment; and/or
ii) have a smaller outside diameter than the inside diameter of the center segment; and/or
iii) at least zonally includes a layer that is arranged in the direction of the center segment.

4. The roller furnace according to any one of the preceding claims, **characterized in that** the connection between the center segment and the first and/or second end segment is established at least partially via a sleeve, the sleeve at least zonally contacting the center segment and
i) contacting the first and/or second end segment; or
ii) contacting at least one further segment of the roller, which is located between the center segment and the first or second end segment.

5. The roller furnace according to the preceding claim, **characterized in that** the sleeve
i) has a larger inside diameter than the outside diameter of the roller; and/or
ii) has a smaller outside diameter than the inside diameter of the roller; and/or
iii) has a wall thickness that is 0.1 mm to 20 mm; and/or
iv) is formed as a collar; and/or
v) at least zonally includes a layer that is arranged between the sleeve and the roller.

6. The roller furnace according to any one of the two preceding claims, **characterized in that** the sleeve comprises or consists of
i) a metal; and/or
ii) a metal alloy; and/or
iii) a metal ceramic; and/or
iv) an oxidic material; and/or
v) a hard material; and/or
vi) a fiber material.

7. The roller furnace according to any one of the preceding claims, **characterized in that** the center segment comprises or consists of
i) a metal; and/or
ii) a metal alloy; and/or
iii) a metal ceramic; and/or
iv) an oxidic material; and/or
v) a hard material; and/or
vi) graphite;
vii) a fiber material.

8. The roller furnace according to any one of the preceding claims, **characterized in that** the first and/or the second end segment comprises or consists of
i) a metal; and/or
ii) a metal alloy; and/or
iii) a metal ceramic; and/or
iv) an oxidic material; and/or
v) a hard material; and/or
vi) a refractory material; and/or
vii) basalt;
viii) glass;
ix) plastic material;
x) a fiber material.

9. The roller furnace according to any one of the preceding claims, **characterized in that** the center segment is connected to the first and/or the second end segment
i) in a force-locking and form-locking manner; and/or
ii) also in a bonded manner.

10. The roller furnace according to any one of the preceding claims, **characterized in that** the first and/or the second end segment has
i) with respect to the specific thermal conductivity of the center segment, an at least 1%,
ii) an at least 1 W/(m·K),
lower specific thermal conductivity than the center segment.

11. The roller furnace according to any one of the preceding claims, **characterized in that** the heating chamber comprises
i) at least one supply for gas; and/or
ii) a heat source suitable for generating a temperature of 400 to 1600°C in the heating chamber.

12. A method for economically treating an object to be fired with heat, comprising the following steps:
a) treating objects to be fired in the heating chamber of a roller furnace according to any one of the preceding claims;
b) measuring a wall thickness of the center segment, of the first end segment and/or of the second end segment of the roller;
c) replacing the center segment, the first end segment and/or the second end segment when the wall thicknesses thereof have dropped below a critical value, the replacement comprising releasing the force-locking and/or form-locking connection between the center segment and the first and/or second end segment.

13. The method according to claim 12, **characterized in that** the replacement of the center segment, of the first end segment and/or of the second end segment is carried out when the wall thickness has decreased by 1 to 2 mm.

14. The method according to either claim 12 or 13, **characterized in that** the treatment of objects to be fired in the heating chamber of the roller furnace is carried out at a temperature of 400 to 1600°C.

15. Use of the roller furnace according to any one of claims 1 to 11 for thermally treating an object to be fired, preferably for thermally treating an object to be fired at temperatures of 400 to 1600°C.

## Revendications

1. Four à rouleaux destiné au traitement thermique d'un article à cuire, contenant
a) une chambre de chauffage, qui contient au moins une source de chaleur ; et
b) au moins un rouleau pour le transport d'un article à cuire à travers la chambre de chauffage ;
**caractérisé en ce que** l'au moins un rouleau contient au moins un segment central disposé dans la chambre de chauffage au milieu du rouleau et un premier segment d'extrémité et un deuxième segment d'extrémité, où le premier et le deuxième segment d'extrémité sont disposés à des extrémités du segment central se situant l'une en face de l'autre et sont disposés au moins par endroits à l'extérieur de la chambre de chauffage, où le premier et le deuxième segment d'extrémité présentent respectivement une liaison par complémentarité de forces et/ou par complémentarité des formes avec le segment central, et le premier et le deuxième segment d'extrémité présentent une conductibilité de la chaleur spécifique plus faible que le segment central.

2. Four à rouleaux selon la revendication 1, **caractérisé en ce que** le four à rouleaux présente au moins deux rouleaux pour le transport d'un article à cuire à travers la chambre de chauffage.

3. Four à rouleaux selon la revendication précédente, **caractérisé en ce que** le premier segment d'extrémité et/ou le deuxième segment d'extrémité
i) présentent un diamètre intérieur plus grand que le diamètre extérieur du segment central ; et/ou
ii) présentent un diamètre extérieur plus petit que le diamètre intérieur du segment central ; et/ou
iii) contiennent au moins par endroits une couche qui est disposée en direction du segment central.

4. Four à rouleaux selon l'une des revendications précédentes, **caractérisé en ce que** la liaison entre le segment central et le premier et/ou le deuxième segment d'extrémité a lieu au moins partiellement par le biais d'un manchon, où le manchon est en contact avec le segment central au moins par endroits, et
i) est en contact avec le premier et/ou le deuxième segment d'extrémité ; ou
ii) est en contact avec au moins un autre segment du rouleau, qui se situe entre le segment central et le premier ou le deuxième segment d'extrémité.

5. Four à rouleaux selon la revendication précédente, **caractérisé en ce que** le manchon
i) présente un diamètre intérieur plus grand que le diamètre extérieur du rouleau ; et/ou
ii) présente un diamètre extérieur plus petit que le diamètre intérieur du rouleau ; et/ou
iii) présente une épaisseur de cloison qui s'élève de 0,1 mm à 20 mm ; et/ou
iv) est conçu sous forme de manchette ; et/ou
v) contient au moins par endroits une couche qui est disposée entre le manchon et le rouleau.

6. Four à rouleaux selon l'une des deux revendications précédentes, **caractérisé en ce que** le manchon contient
i) un métal ; et/ou
ii) un alliage métallique ; et/ou
iii) une céramique métallique ; et/ou
iv) un matériau de type oxyde ; et/ou
v) un matériau dur ; et/ou
vi) un matériau fibreux;
ou en est constitué.

7. Four à rouleaux selon l'une des revendications précédentes, **caractérisé en ce que** le segment central contient
i) un métal ; et/ou
ii) un alliage métallique ; et/ou
iii) une céramique métallique ; et/ou
iv) un matériau de type oxyde ; et/ou
v) un matériau dur; et/ou
vi) du graphite;
vii) un matériau fibreux;
ou en est constitué.

8. Four à rouleaux selon l'une des revendications précédentes, **caractérisé en ce que** le premier et/ou le deuxième segment d'extrémité contiennent
i) un métal ; et/ou
ii) un alliage métallique ; et/ou
iii) une céramique métallique ; et/ou
iv) un matériau de type oxyde ; et/ou
v) un matériau dur ; et/ou
vi) un matériau réfractaire ; et/ou
vii) du basalte ;
viii) du verre ;
ix) un matériau synthétique ;
x) un matériau fibreux ;
ou en est constitué.

9. Four à rouleaux selon l'une des revendications précédentes, **caractérisé en ce que** le segment central est relié avec le premier et/ou le deuxième segment d'extrémité
i) par complémentarité des forces ou par complémentarité des formes ; et/ou
ii) est également relié par complémentarité des matières.

10. Four à rouleaux selon l'une des revendications précédentes, **caractérisé en ce que** le premier et/ou le deuxième segment d'extrémité présentent une conductibilité thermique spécifique plus faible
i) en ce qui concerne la conductibilité thermique spécifique, une conductibilité thermique spécifique plus faible d'au moins 1 %,
ii) de l'équivalent d'au moins 1 W/(m-K),
par rapport au segment central.

11. Four à rouleaux selon l'une des revendications précédentes, **caractérisé en ce que** la chambre de chauffage contient
i) au moins une alimentation pour du gaz ; et/ou contient
ii) une source de chaleur, qui est appropriée pour générer une température de 400 à 1600 °C dans la chambre de chauffage.

12. Procédé de traitement économique d'un article à cuire avec de la chaleur, comprenant les étapes
a) traitement d'articles à cuire dans la chambre de chauffage d'un four à rouleaux selon l'une des revendications précédentes ;
b) mesure de l'épaisseur de cloison du segment central, du premier segment d'extrémité et/ou du deuxième segment d'extrémité du rouleau ;
c) échange du segment central, du premier segment d'extrémité et/ou du deuxième segment d'extrémité lorsque leur épaisseur de paroi est en-dessous d'une valeur critique, où l'échange comprend le détachement de la liaison par complémentarité des forces et/ou de la liaison par complémentarité des formes du segment central par rapport au premier et/ou au deuxième segment d'extrémité.

13. Procédé selon la revendication 12, **caractérisé en ce que** l'échange du segment central, du premier segment d'extrémité et/ou du deuxième segment d'extrémité a lieu lorsque l'épaisseur de la paroi s'est réduite de 1 à 2 mm.

14. Procédé selon l'une des revendications 12 ou 13, **caractérisé en ce que** le traitement d'articles à cuire dans la chambre de chauffage du four à rouleaux a lieu à une température de 400 à 1600 °C.

15. Utilisation d'un four à rouleaux selon l'une des revendications 1 à 11 pour le traitement thermique d'un article à cuire à des températures de 400 à 1600 °C.
